# EUROPÄISCHE PATENTSCHRIFT

(11) **EP 0 971 263 B1**
(45) Veröffentlichungstag und Bekanntmachung des Hinweises auf die Patenterteilung: **30.01.2002**
(21) Anmeldenummer: 99112302.7
(22) Anmeldetag: 26.06.1999
(51) Int. Cl.: G03C 3/00, B65D 85/672, G03B 27/58

(54) **Lichtdichte Verpackung für streifenförmiges lichtempfindliches Material**
Light-tight package for photosensitive strip material
Emballage étanche à la lumière pour produit photosensible en bande

(30) Priorität: 10.07.1998 DE 19830954
(43) Veröffentlichungstag der Anmeldung: 12.01.2000
(73) Patentinhaber: Agfa-Gevaert, 2640 Mortsel (BE)
(72) Erfinder: Essert, Hermann August, 64807 Dieburg (DE); Mühlbach, Steffen Peter, 63329 Egelsbach (DE)

(56) Entgegenhaltungen:
- EP-A- 0 181 417
- EP-A- 0 488 738
- EP-A- 0 536 608
- EP-A- 0 786 695
- WO-A-97/04358
- US-A- 4 505 387

## Beschreibung

Die Erfindung bezieht sich auf eine lichtdichte Verpackung für streifenförmiges lichtempfindliches Material nach dem Oberbegriff des Anspruchs 1 und auf ein Verfahren zur Herstellung einer lichtdichten Verpackung nach dem Oberbegriff des Anspruchs 16.

Lichtdichte Verpackungen sichern die Gebrauchsfähigkeit des lichtempfindlichen Materials, beispielsweise des fotografischen Papier- oder Filmmaterials, bis zur Verwendung in einem Verarbeitungsgerät. Sie schützen das lichtempfindliche Material, im folgenden kurz Filmmaterial, vor ungewollter Belichtung, vor Feuchtigkeit und vor mechanischen Beschädigungen.

Eine gebräuchliche Verpackungsform für bahnförmiges Filmmaterial ist die sogenannte Wickelrolle, bei der das Filmmaterial um eine Wickelhülse gewickelt ist und lichtdicht durch eine umhüllende Abdeckfolie und gegebenenfalls zwei Seitenabdeckungen geschützt ist. Erfolgreich am Markt eingeführt sind sogenannte Tageslichtverpackungen, die einen Filmwechsel im Hellen erlauben. Bei einem derartigen Filmwechsel wird die Wickelrolle von Hand auf zwei Aufnahmedorne eines Verarbeitungsgerätes gespannt. Die Abdeckfolie, die hier einen Vorspann zum Filmmaterial bildet, teilweise abgewickelt und durch einen lichtdichten Schlitz einer Aufnahmevorrichtung des Gerätes geführt. Anschließend wird der Deckel der Aufnahmevorrichtung geschlossen. Ein weiteres Ziehen am Vorspann bewirkt, daß die Abdeckfolie abgezogen und das Filmmaterial aus dem Schlitz austritt. Meist wird der Vorspann nun vom Film getrennt und verworfen. Der Fördermechanismus erfaßt den Filmanfang und transportiert den Film in den Verarbeitungsbereich des Gerätes. Die neue Filmrolle ist geladen. Das Gerät ist nun wieder betriebsbereit. Der Filmwechsel erfordert keine Dunkelkammer.

Aufgrund vorgegebener Abmessungen in der Aufnahmevorrichtung ist eine Vergrößerung der Außen-Abmessungen des Filmwickels durch die Verpackung oft nur in engen Grenzen zulässig. Bei vielen Verarbeitungsgeräten ist der axiale Abstand der Aufnahmedorne zwar einstellbar, so daß auch weniger breite Filmformate verarbeitet werden können, er ist aber für das größte Filmformat stets begrenzt. Oft überragt die axiale Länge des verpackten Filmmaterials nur geringfügig die zur Verfügung stehende lichte Breite des Einbauraums der Aufnahmevorrichtung. Das fotografische Filmmaterial ist wegen seiner Verpackung dann in diesem Gerät nicht verwendbar. Die für die Verpackungsabmessungen zulässigen Toleranzen können sehr eng bemessen sein.

Neuere Generationen von Belichtungsgeräten ermöglichen einen automatischen Produktwechsel bei noch nicht aufgebrauchtem Filmmaterial in der Vorratskassette, ohne daß bereits in die Maschine eingezogenes Filmmaterial unbrauchbar wird. Dazu ist es notwendig, daß die in die Maschine eingezogene Filmbahn wieder zurück in die Vorratskassette transportiert und aufgewickelt werden kann.

Die Rückspuleigenschaft bedingt, daß Verpackungsteile, die nach dem Öffnen der Verpackung im Gerät verbleiben, den Bahnlauf nicht behindern.

Darüber hinaus ist man bestrebt, die Einzelkomponenten der Verpackung möglichst einheitlich zu gestalten. Die Verpackung soll einfach und kostengünstig herzustellen sein.

Man ist ferner bestrebt, die Verpackung so auszuführen, daß sie auf einfache Weise in unterschiedliche Materialien getrennt und gegebenenfalls einem Recycling-Verfahren zugeführt werden kann.

Aus EP 0 536 608 und EP 0 488 738 sind Tageslicht-Verpackungen bekannt, bei denen starrwandige Bordscheiben die Stirnseiten eines zylindrischen Filmwickels abdecken. Ein äußerer Rand jeder Bordscheibe überragt die äußere Zylindermantelfläche des Filmwickels. Eine flexible Abdeckfolie, die breiter als das streifenförmige Filmmaterial ist, wird unter Zugspannung um die Mantelfläche des Filmwickels gewickelt und umbördelt in seitlichen Randbereichen jeweils die Umfangsfläche dieser starren Seitenabdeckungen. Das Umbördeln erfolgt durch Dehnen der Abdeckfolie, d.h. die Abdeckfolie wird unter Zugspannung um die äußere Zylindermantelfläche des Filmwickels und um den äußeren Rand jeder Bordscheibe gewickelt. Hierbei muß die Bordscheibe dem Radialdruck, der beim Dehnen der Abdeckfolie entsteht, standhalten. Mit anderen Worten: Um einen lichtdichten Abschluß herzustellen, muß die Bordscheibe so stabil ausgeführt sein, daß sie nicht knickt bzw. ausbeult. Je nach verwendetem Werkstoff ist die Bordscheibe entsprechend dick auszuführen, was zu einer unzulässigen Verpackungsgröße führen kann. Gleiches gilt auch für die Befestigung in der Wickelhülse. Es ist ferner von Nachteil, daß die Abdeckfolie bei der Bördelung, die durch Dehnung hergestellt wird, von den Außenflächen jeder Bordscheibe absteht. Diese abstehenden lateralen Ränder erfüllen oft nicht die eingangs dargestellte Anforderung hinsichtlich der engen Platzverhältnisse im Verarbeitungsgerät. Es ist auch von Nachteil, daß bei dieser Dehn-Bördelung bei mechanischen Beanspruchungen, die beispielsweise während des Transports des Filmmaterials auf die Verpackung wirken, die Lichtsicherheit nicht immer gewährleistet ist. Es kann vorkommen, daß sich die Dehn-Bördelung öffnet. Das Filmmaterial ist dann nicht mehr verwendbar.

Eine tageslichtverpackte Filmrolle ist auch aus EP 0 632 322 und US 4 148 395 bekannt. Die Verpackung weist zungenförmige Abschnitte auf, die auf die Mantelfläche des Zylinders umgeklappt und mit dieser verklebt werden. Bei einer aus US 4,505,387 bekannten Verpackung werden zungenförmige Abschnitte an die Stirnseite des Zylinders geklebt. Es hat sich aber gezeigt, daß es bei derartigen Verpackungen vorkommen kann, daß Rückstände von Verpackungsteilen und von Klebstoff die weitere Verarbeitung des fotografischen Materials im Gerät beeinträchtigen können. Darüber hinaus kann es vorkommen, daß, beispielsweise wenn der Film im Gerät zurückgespult werden soll, die flexiblen Seitenteile bzw. andere Verpackungsteile in den Bahnlauf des Filmmaterials geraten. Der Verarbeitungsablauf im Gerät wird dadurch gestört.

In EP 0 181 417 ist eine Tageslicht-Verpackung für bahnförmiges Filmmaterial offenbart, bei der eine lichtdichte Schrumpffolie den Filmwickel umhüllt. Die Schrumpffolie ist so breit ausgeführt, daß sie die Stirnflächen abdeckt und überstehende Ränder in die Wickelhülse eingeschlagen und dort lichtdicht versiegelt werden können. Die Verwendbarkeit des Filmmaterial wird durch mangelhafte Rückspulfähigkeit eingeschränkt. Auch nach dem Schrumpfen verbleiben an den Stirnflächen Falten, die die axiale Abmessung des Filmwickels unzulässig vergrößern.

Ein Schlauch aus hydratisierter Fasermasse, der sich getrocknet an starre Stimscheiben schmiegt, ist für eine lichtdichte und tropenfeste Verpackung von Filmspulen aus DE 706 467 bekannt.

In WO 97 04358 ist eine tageslichtverpackte Filmrolle offenbart, bei der die Stirnseiten des Filmwickels von Flanschscheiben abgedeckt werden die eine nach außen gerichtete Wölbung aufweisen, um das Rückspulen der Filmbahn zu erleichtern. Jede Flanschscheibe umfaßt zwei Scheiben unterschiedlicher Durchmesser.

Aus EP 0 786 695 is eine Tageslichtverpackung für fotographisches Papier in Form von Rollen bekannt, die seitliche kreisförmige Flansche und eine mit den Flanschen verschweißten Abdeckfolie umfaßt. Jeder Flansch weist eine Schicht eines synthetischen Polymers, aufgebracht durch Extrusion, auf, die dem Flansch eine Spannung verleiht, die ein nach innen Fallen des Flansches (von der Rolle aus gesehen) verhindert.

In EP 0 488 738 ist eine Tageslichtverpackung offenbart, bei der Flanschscheiben die Stirnseiten des Filmwickels abdecken und eine Abdeckfolie um die Mantelfläche des Filmwickels gewickelt wird. Die Abdeckfolie ist breiter als der Filmwickel und umfaßt elastisches Material, das in U-Form über die Ränder der Flanschscheiben gewickelt wird um eine lichtsichere Abdeckung zu verwirklichen.

Der Erfindung liegt die Aufgabe zugrunde, eine lichtdichte Verpackung für lichtempfindliches streifenförmiges Material so anzugeben, daß die Verpackung die axiale Länge und den Innendurchmesser des Filmwickels nicht wesentlich verändert, der Film auch unter Tageslicht geladen und im Gerät störungsfrei rückgespult werden kann; ohne daß störende Verpackungsrückstände im Verarbeitungsgerät verbleiben, und daß die Verpackung kostengünstig herstellbar ist.

Diese Aufgabe wird erfindungsgemäß durch eine Verpackung mit den Merkmalen des Anspruchs 1 und durch ein Verfahren zur Herstellung einer Verpackung gemäß den Merkmalen des Anspruchs 16 gelöst. In den abhängigen Ansprüchen sind vorteilhafte und bevorzugte Weiterbildungen der Erfindung angegeben.

Gemäß der Erfindung ist vorgesehen, daß eine Abdeckfolie zumindest in seitlichen Randbereichen wärmeschrumpffähiges Material umfaßt, welches durch Wärmezufuhr jeweils auf einem äußeren Rand beidseits am Filmwickel angebrachter steifer Flanschscheiben aufgeschrumpft wird. Das Schrumpfen der Abdeckfolie wird durch Zufuhr von Wärme erreicht. Die steif ausgeführten Flanschscheiben müssen nicht mehr die beim Dehnen auftretenden vergleichsweise hohen Radialkräfte aufnehmen, sondern nur die weit geringeren Schrumpfkräfte. Die Flanschscheiben können vergleichsweise dünn ausgeführt werden. Die Schrumpfverbindung ermöglicht vorteilhaft ein faltenfreies Umschließen der äußeren Ränder jeder Seitenabdeckung, d.h. die Abdeckfolie schmiegt sich eng anliegend an Innen-, Umfangs- und Außenfläche des äußeren Randes jeder Seitenabdeckung. Der äußere Rand wird durch das Schrumpfen umbördelt. Der äußere Rand überragt die Zylindermantelfläche des Wickels. Die Lichtdichtigkeit ist dadurch auch bei mechanischen Beanspruchungen gewährleistet.
Die Verpackung des bahnförmigen Filmaterials vergrößert den Wickel axial nur gering und ermöglicht aufgrund der steifen Flanschscheiben ein störungsfreies Rückspulen. Die Abdeckfolie kann, beispielsweise durch Extrusion, so hergestellt werden, daß sie zumindest in seitlichen Randbereichen aus wärmeschrumpffähigem Material gebildet wird. Dabei kann die Abdeckfolie aus einer oder mehreren Schichten bestehen. Die Abdeckfolie kann aber auch so ausgeführt sein, daß wärmeschrumpffähige seitliche Randbereiche an einem bahnförmigen Mittelteil geklebt oder mit diesem verschweißt sind. Wesentlich ist, daß die Abdeckfolie zumindest in seitlichen Randbereichen eine Schrumpfeigenschaft aufweist, d.h. eine Materialeigenschaft aufweist, die bewirkt, daß sich die Folie in diesem Bereich bei Zufuhr von Wärme zusammenzieht. Folienbahnen mit diesen Materialeigenschaften sind bekannt. Das Schrumpfvermögen kann in Bahnrichtung Werte bis über 50 % erreichen.

Die flanschförmigen Seitenabdeckungen der Verpackung können mit der Wickelhülse stirnseitig verklebt sein oder mittels eines nabenförmigen Ansatzes, eines Tubus, in der Wickelhülse befestigt werden. Aufgrund der vergleichsweise geringen Schrumpfkräfte kann auch dieser Tubus sehr dünnwandig ausgeführt werden. Die erfindungsgemäße Verpackung verändert folglich auch nur geringfügig den Innendurchmesser der Wickelrolle.

Mit Vorteil besteht die Abdeckfolie insgesamt aus schrumpffähigem Material, also aus einer lichtdichten Schrumpffolie, die mit dem Filmmaterial verbunden ist. Lichtdichte Schrumpffolien sind in verschiedensten Ausführungen kommerziell erhältlich. Diese Ausführungsform ist kostengünstig. Schrumpffolien sind auch als sogenannte Verbundfolien verfügbar. Unter Schrumpffolie ist im folgenden allgemein eine Folie zu verstehen, die sich in der Wärme zusammenzieht und eine lichtabschirmende Wirkung aufweist. Das Zusammenziehen einer Schrumpffolie ist eine bekannte Materialeigenschaft, die bei der Herstellung der Folie vorgegeben wird. Die Folie wird beim Herstellen gereckt und abgekühlt. Das Material der Folie weist dann eine Orientierung auf. Aufgrund des sogenannten Memory-Effektes des Materials wird bei erneuter Erwärmung der ursprüngliche Zustand wieder hergestellt.

Gemäß der Erfindung wird also der überstehende äußere Rand jeder Flanschscheibe durch eine Wärmeschrumpfverbindung mit der Abdeckfolie umbördelt. Die Abdeckfolie ist flexibel, die Flanschscheibe steif ausgeführt. Das Aufschrumpfen der seitlichen Randbereiche der Abdeckfolie verändert die Form der Flanschscheibe nicht, d.h. beim Schrumpfen und nach dem Schrumpfen beult und knickt die Flanschscheibe nicht.

Die aufgeschrumpften Randbereiche der Schrumpffolie umschließen dabei den äußeren Rand eng anliegend. Die Schrumpffolie weist nach dem Schrumpfen mit Vorteil keine Falten auf Da der Abschluß zwischen Seitenabdeckung und Abdeckfolie eng anliegend ausgeführt werden kann, ist die Verpackung auch bei mechanischen Beanspruchungen lichtsicher. Die axiale Abmessung der Verpackung ist nur geringfügig größer als die Filmbreite. Das lichtempfindliche Material wird zuverlässig bis zur Verwendung geschützt. Die Filmrolle kann wie eingangs erläutert unter Tageslicht geladen werden. Nach dem Öffnen der Verpackung verhindert die steife Ausführung der Flanschscheiben, daß seitliche Teile der Verpackung in den Bahnlauf geraten. Der Rückspulweg des Films wird durch Teile der Verpackung, die nach dem Öffnen im Gerät verbleiben, nicht versperrt. Der Film kann während der Verarbeitung im Gerät seine Bewegungsrichtung ohne Störung ändern und zuverlässig auf den Filmwickel wieder rückgespult werden. Die zu öffnenden Verbindungsstellen zwischen der Abdeckfolie und den Seitenabdeckungen der Verpackung weisen keine Klebestellen auf. Folglich verbleiben nach dem Öffnen der Verpackung keine Rückstände von Klebstoff im Verarbeitungsgerät. Funktionsstörungen des Verarbeitungsgerätes, die durch Reste von Klebstoff oder durch geklebte zungenförmige Abschnitte verursacht werden, treten nicht auf. Die Verpackung ist vergleichsweise zum Stand der Technik kostengünstig herstellbar.

Es ist von Vorteil, wenn die Abdeckfolie mit einer hitzebeständigen Trennschicht, beispielsweise einem hitzebeständigen Lack beschichtet ist. Eine derartige Antihaftbeschichtung verhindert, daß die einzelnen Lagen der Abdeckfolie nach dem Schrumpfen aneinander haften oder während des Schrumpfens verschweißen.

Bei einer bevorzugten Ausführungsform ist dafür gesorgt, daß die aufgeschrumpfte Abdeckfolie auf die Flanschscheibe einen Radialdruck ausübt, der kleiner als die niedrigste kritische Belastung der Flanschscheibe ist. Diese Abstimmung des Radialdrucks der Abdeckfolie auf die kritische Belastung des Seitenteils ermöglicht, daß das Seitenteil sehr dünnwandig ausgeführt werden kann.

In einer besonders bevorzugten Ausführungsform ist die Flanschscheibe eine Kunststöffscheibe, mit einer Dicke von 0,4 mm bis 1,0 mm, besonders bevorzugt aus Polystyrol mit einer Dicke von 0,6 mm, und weist einen äußeren Rand auf, der von mindestens einer Lage einer Abdeckfolie mit einer Dicke von 0,05 mm bis 0,2 mm, besonders bevorzugt von einer axial vorgereckten Polyethylen-Schrumpffolie mit einer Dicke von 0,07 mm bis 0,08 mm, umhüllt wird. Diese Ausführungsform führt zu einer besonders kostengünstigen und sehr platzsparenden lichtdichten Verpackung.

Günstig ist, wenn jede flanschförmige Seitenabdeckung einstückig ausgebildet ist und an jeder Flanschscheibe ein nabenförmiger Ansatz angeformt und in einem offenen Ende der Wickelhülse haftend angebracht ist. Bei dieser Ausbildung weist die Seitenabdeckung einen Tubus auf. Der Tubus hält die Seitenabdeckung in der Wickelhülse. Diese Ausführungsform der Seitenabdeckungen kann durch Tiefziehen kostengünstig hergestellt werden. Üblicherweise ist die Wickelhülse ein Pappkern. In diesem Fall kann nach Verwendung des Filmmaterials die Verpackung einfach in unterschiedliche Werkstoffe getrennt und gegebenenfalls die Werkstoffe wiederverwendet werden.

Hierbei empfiehlt es sich, daß der dünnwandige, nabenförmige Ansatz in einen konischen Abschnitt mit einer Rundung mündet und zum Nabenende hin dünnwandig bleibt.

Zunächst erleichtert der konische Abschnitt mit der Rundung das Einbringen der Seitenabdeckung in das offene Ende der Wickelhülse. Insbesondere wenn dieses Seitenteil durch Reibschluß in der Wickelhülse haftend angebracht werden soll, also der Außendurchmesser des nabenförmigen Ansatzes beispielsweise um 0,3 m bis 0,5 mm größer als der Innendurchmesser der Wickelhülse ist, ist die zentrierende Wirkung des konischen Abschnittes gewünscht.

Mit besonderem Vorteil ist der nabenförmige Ansatz auf einer zur Wickelhülse hin liegenden Wirkfläche mit Klebstoff, bevorzugt mit einem Heißschmelz-Klebstoff, beschichtet. Ein Heißschmelz-Klebstoff, auch als "Hot-Melt" bezeichnet, ist ein Klebstoff, der erst unter Einwirkung von Wärme klebrig wird. D.h. bei dieser besonders bevorzugten Ausführungsform kann jedes Seitenteil mittels eines Heiz- und Anpreßwerkzeuges im offenen Ende der Wickelhülse befestigt werden. Erst wenn dieses Heiz- und Anpreßwerkzeug den nabenförmigen Ansatz an seiner inneren Nabenfläche erwärmt und an die Wickelhülse preßt, wird die Wirkfläche zu einer Klebefläche. Durch die Klebung ist dann jede Seitenabdeckung in einem offenen Ende der Wickelhülse befestigt.

Hierbei empfiehlt es sich, daß der nabenförmige Ansatz aus Kunststoff mit einer Schmelztemperatur, die höher als die Schmelztemperatur des Heißschmelz-Klebstoffes liegt, gefertigt ist. Dann ist gewährleistet, daß der Klebstoff klebrig wird, bevor der Kunststoff schmilzt. Der zum Nabenende hin dünnwandig ausgeführte Ansatz ermöglicht, daß nach dem Erwärmen und Anpressen der nabenförmige Ansatz mit der zylindrischen Innenfläche der Hülse fluchtet. Konus und Rundung, die bei der Montage des Seitenteils gewünscht zentrierend wirkten, sind nach dem Erwärmen und Anpressen buchsenförmig an die Wickelhülse geformt. Es verbleibt kein Ansatz in der Wickelhülse, der dem Aufnahmedorn des Verarbeitungsgerätes störend entgegen stehen könnte.

Insbesondere dann, wenn jede flanschförmige Seitenabdeckung tiefgezogen und aus Polystyrol oder PVC gefertigt ist, ist die Herstellung der Seitenabdeckung in der gewünschten dünnwandigen Ausführung besonders kostengünstig.

Es ist von Vorteil, wenn die Flanschscheibe als kegelförmig ausgebildete Ringscheibe ausgeführt ist. Diese wirkt dann als Tellerfeder. Die Tellerfeder ist gespannt, wenn die Verpackung geschlossen ist. Die Abdeckfolie preßt jede Ringscheibe zur entsprechenden Stirnfläche des Filmwickels. Wenn die Verpackung geöffnet wird, also die Abdeckfolie bei eingelegter Filmrolle abgerollt und durch den Schlitz des Verarbeitungsgerätes gezogen wird, entspannt sich die Tellerfeder. Die Verpackung gibt den Filmweg frei. Die Flanschscheibe schließt mit der Tellerebene, die parallel zur entsprechenden Stirnfläche des Wickels verläuft, einen Winkel ein, der verhindert, daß die Flanschscheibe beim Rückspulen den Bahnlauf des Filmmaterials stört.

Hierbei empfiehlt sich für die meisten am Markt befindlichen Verarbeitungsgeräte eine kegelförmig ausgebildete Ringscheibe, die im unbelasteten Zustand gegenüber der Tellerebene einen Winkel von 0,5 bis 3 Grad, insbesondere 2 Grad einschließt. Ein ungehindertes Entrollen und Zurückspulen des Filmmaterials wird dann auch bei Fertigungsungenauigkeiten des tiefgezogenen Seitenteils gewährleistet.

Günstig ist es auch, wenn jede der Flanschscheiben auf der von der entsprechenden Stirnfläche des Filmwickels abgewandten Flanschfläche einen vorspringenden Ansatz aufweist, der eine Höhe aufweist, die mindestens so groß ist wie die aufgeschrumpfte Abdeckfolie. Dadurch wird verhindert, daß Seitenteile des Verarbeitungsgerätes das Abziehen der Abdeckfolie durch Klemmen hindern. Der Ansatz wirkt als Abstandshalter. Er verhindert, daß die Seitenteile des Verarbeitungsgerätes auf die Bördelung der Abdeckfolie drücken. Hierbei ist besonders bevorzugt wenn der Ansatz als ringförmige Sicke ausgebildet ist. Diese Sicke ist durch Tiefziehen leicht herstellbar.

Mit Vorteil ist die Breite der Abdeckfolie um mehr als 10 mm größer als die Breite des Filmmaterials. Es schmiegt sich dann beim Schrumpfen auf jeder Seite der seitliche Rand der Abdeckfolie faltenfrei um den äußeren Rand der entsprechenden Flanschscheibe. Diese eng anliegende Schrumpfverbindung ist lichtdicht und verbessert auch die mechanischen Eigenschaften der Verpackung, indem jede Seitenabdeckung zum Filmwickel hin gepreßt wird.

Bevorzugterweise entspricht die Länge des flexiblen Vorspanns mindestens einer Umfangslänge des Filmwickels, umwickelt also mehr als dessen äußere Umfangsfläche. In der Praxis hat sich ein Vorspann, dessen Länge mehr als etwa die 1,5-fache Umfangslänge des Filmwickels beträgt, bewährt. Der Vorspann ist mittig mit der Filmbahn fixiert. Das Anfangsstück des Vorspanns kann beispielsweise durch Klebestreifen an der äußeren Mantelfläche des Filmwickels befestigt sein.

Mit Vorteil ist der Tubus aus schwarz pigmentiertem Kunststoff, beispielsweise aus Polystyrol. Dieses Material ist bruchsicher und erlaubt eine kostengünstige und maßgenaue Fertigung. Der Werkstoff ist für die Wiederverwertung geeignet. Bei einer Wandstärke des nabenförmigen Ansatzes von 0,15 mm bis 0,25 mm paßt die Wickelrolle in alle am Markt befindlichen Verarbeitungsgeräte. Die Kontaktfläche zum Aufnahmedorn ist eben. Das Einlegen der Filmrolle gestaltet sich beim Filmwechsel einfach. Schwankende Wickelkerntoleranzen eines Pappkerns werden durch das elastische Material ausgeglichen.

Hinsichtlich der Wiederverwertbarkeit der Werkstoffe ist es auch vorteilhaft, wenn die Wickelhülse und jede Seitenabdeckung aus Kunststoff ausgeführt ist und die Seitenteile mit der Hülse durch eine Kunststoffschweißverbindung verbunden sind.

Die Erfindung betrifft auch ein Verfahren zur Herstellung einer lichtdichten Verpackung. Das Verfahren ist dadurch gekennzeichnet, daß man die flanschförmigen Seitenabdeckungen beidseits des Filmwickels an den offenen Enden der Wickelhülse haftend anbringt, dann die äußere Mantelfläche des Filmwickels mit der Abdeckfolie, die ein wärmeschrumpffähiges Material umfaßt, so umwickelt, daß jeweils ein Randbereich der Abdeckfolie, bezogen auf die entsprechende Stirnfläche des Filmwickels übersteht und schließlich die überstehenden Randbereiche der Abdeckfolie erwärmt, so daß diese auf dem äußeren Rand jeder Flanschscheibe faltenfrei aufschrumpfen.

Hierbei ist es vorteilhaft, daß man das Anbringen der Seitenabdeckungen mittels eines Heiz- und Anpreßwerkzeuges durchführt, wobei ein nabenförmiger Ansatz jeder Seitenabdeckung erwärmt, an die Wickelhülse gepreßt und an diese geklebt wird. Der Verfahrensschritt ist automatisierbar. Es entsteht eine zuverlässige, rutschfeste Verbindung zwischen Seitenabdeckung und Wickelhülse. Das Erwärmen der Abdeckfolie ist entsprechend der Materialeigenschaften des wärmeschrumpffähigen Materials anzupassen. Schrumpftemperaturen von Schrumpffolien liegen zwischen 65 bis 165 Grad Celsius. Bevorzugt verwendetes wärmeschrumpffähiges Material weist eine Schrumpftemperatur zwischen 120 und 130 Grad Celsius auf. Die Zufuhr der Wärme kann durch Heißluft erfolgen.

Die Erfindung wird nachstehend anhand von Ausführungsbeispielen und zugehörigen Zeichnungen näher erläutert. In diesen zeigen:
- Fig. 1a: eine Explosionsdarstellung eines Ausführungsbeispiels der erfindungsgemäßen Verpackung,
- Fig. 1b: die lichtdichte Verpackung in räumlicher Darstellung,
- Fig. 2a: eine Detaildarstellung einer in mehreren Lagen auf den äußeren Rand einer Flanschscheibe aufgeschrumpften Abdeckfolie,
- Fig. 2b: eine Detaildarstellung einer in einer Lage auf den äußeren Rand einer Flanschscheibe aufgeschrumpften Abdeckfolie,
- Fig. 3: eine Schnittzeichnung einer flanschförmigen Seitenabdeckung in einer bevorzugten Ausgestaltung,
- Fig. 4a: eine Schnittdarstellung einer bevorzugten Seitenabdeckung vor dem Befestigen in der Wickelhülse,
- Fig. 4b: eine Schnittdarstellung einer in der Wickelhülse befestigten bevorzugten Ausführung einer Seitenabdeckung,
- Fig. 5a: eine Schnittdarstellung einer besonders bevorzugten Seitenabdeckung vor dem Befestigen in der Wickelhülse,
- Fig. 5b: eine Schnittdarstellung einer in der Wickelhülse befestigten besonders bevorzugten Ausführung einer Seitenabdeckung,
- Fig. 6: einen Teilschnitt einer geöffneten Verpackung in einem Verarbeitungsgerät.

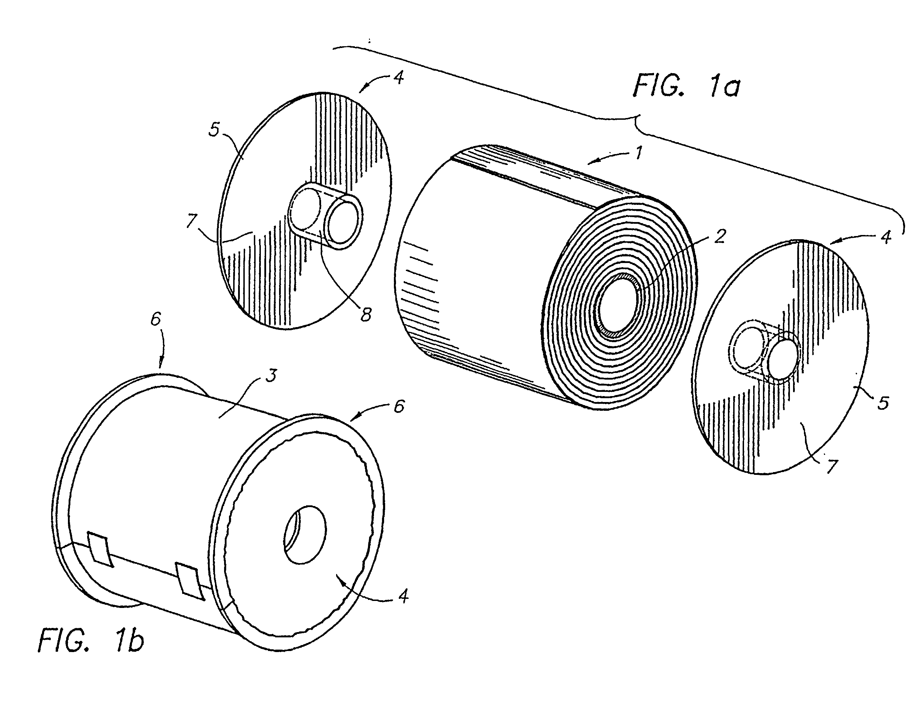

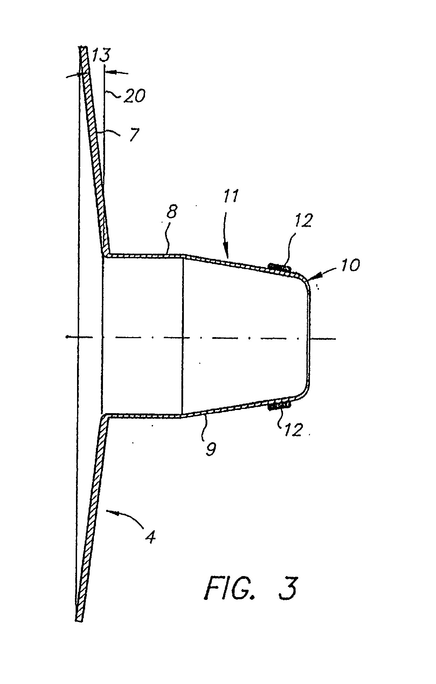

Fig. 1a zeigt ein Ausführungsbeispiel der erfindungsgemäßen Verpackung in einer Explosionsdarstellung. Fig. 1b zeigt die geschlossene Verpackung in räumlicher Darstellung. Das streifenförmige lichtempfindliche Material ist spiralförmig um eine Wickelhülse 2 gewickelt. Die Stirnflächen dieses so gebildeten Filmwickels 1 sind im wesentlichen eben und werden jeweils durch eine Seitenabdeckung 4 vor einfallendem Licht abgedeckt. Die Mantelfläche des Zylinders umhüllt eine lichtundurchlässige Abdeckfolie 3. Zusammen mit der lichtundurchlässigen Wickelhülse wird das lichtempfindliche Material vor ungewollter Belichtung, vor Feuchtigkeit und vor mechanischen Beschädigungen geschützt. Jede der Seitenabdeckungen 4 weist eine steife Flanschscheibe 7 mit einem äußeren Rand 5 auf. Letzterer überragt die Zylindermantelfläche. Die Abdeckfolie 3 ist insgesamt breiter als das gewickelte streifenförmige Material. Zumindest in seitlichen Randbereichen 6 weist die Abdeckfolie wärmeschrumpffähiges Material auf, welches auf dem äußeren Rand 5 jeder Flanschscheibe 7 aufgeschrumpft ist. Der zwischen den Randbereichen liegende Mittelteil der Abdeckfolie ist so ausgeführt, daß beim Öffnen der Verpackung die Folie nicht reißt. Die Abdeckfolie 3 kann aber auch insgesamt aus wärmeschrumpffähigem Material bestehen, also als sogenannte lichtdichte Schrumpffolie ausgeführt sein. In der in Fig. 1a gezeigten Ausführungsform ist an der Seitenabdeckung 4 ein nabenförmiger Ansatz 8 angeformt. In Fig. 3 sind diese Seitenabdeckungen 4 als Schnittzeichnung vor dem Befestigen in der Wickelhülse gezeigt. Der nabenförmige Ansatz 8 bildet einen Tubus, der zum Einführen und Befestigen der Seitenabdeckung 4 in ein offenes Ende der Wickelhülse 2 dient. Die Befestigung kann je nach Ausführung der Verpackung durch Reibschluß oder durch eine Klebeverbindung erfolgen. Die Befestigung des Tubus verhindert, daß eine Seitenabdeckung in der Wickelhülse durchrutscht, wenn im Verarbeitungsgerät das lichtempfindliche Material vom Filmwickel ab- oder auf diesen zurückgespult wird. Wie untenstehend erläutert, wird der Tubus beim Befestigungsvorgang durch Wärmeeinwirkung im offenen Ende der Wickelhülse angeformt.

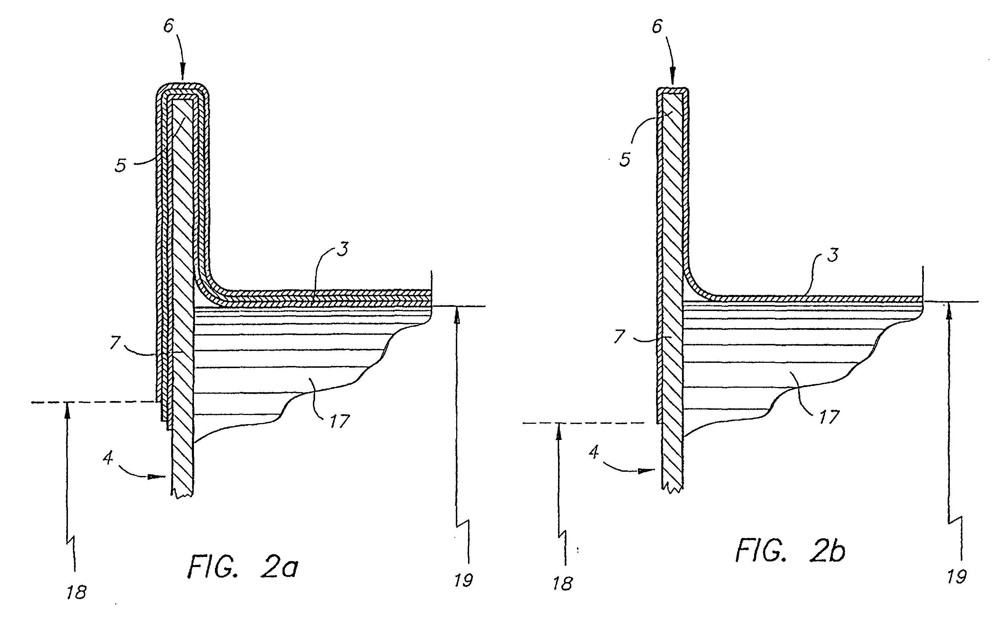

In Fig. 2a und in Fig. 2b ist die aufgeschrumpfte Abdeckfolie 3 in einer Detaildarstellung gezeigt. Der Teilschnitt in Fig. 2a zeigt beispielhaft drei Lagen einer Abdeckfolie 3, die um den äußeren Rand einer steifen Flanschscheibe 7 geschrumpft sind. Die einzelnen Lagen schmiegen sich eng anliegend und faltenfrei um den äußeren Rand 5 der steifen Seitenabdeckung. Er überragt die Mantelfläche der Wickelrolle, d.h. der Durchmesser des äußeren Randes der Flanschscheibe ist größer als der Durchmesser 19 des Filmwickels. In der Praxis hat sich ein Überstand von 1 bis 3 mm bewährt. Die aufgeschrumpften seitlichen Randbereiche 6 der Abdeckfolie 3 bilden einen u-förmigen, lichtdichten Abschluß zwischen der flexiblen Abdeckfolie und der starrwandigen Seitenabdeckung.

Fig. 2b zeigt beispielhaft eine Lage einer Abdeckfolie 3, deren seitlicher Randbereich 6 um den äußeren Rand einer steifen Flanschscheibe 7 geschrumpft ist. Die Schrumpfverbindung ist u-förmig. Wie auch in Fig. 2a gezeigt, bildet diese eng anliegende Schrumpfverbindung an den Kanten der Flanschscheibe für einfallendes Licht ein Labyrinth. Aus Fig. 2a und Fig. 2b ist ersichtlich, daß die Abdeckfolie nach dem Schrumpfen von der äußeren Stirnfläche der Flanschscheibe nicht absteht. Mit anderen Worten: Die Verpackung vergrößert die axiale Abmessung des Wickels beidseits nur um die Dicke der Flanschscheibe und um die Dicke der Abdeckfolie, die gegebenenfalls mehrfach gewickelt sein kann. Wie aus einem Vergleich der Fig. 2a mit Fig. 2b erkennbar, ist ein lichtdichter Abschluß auch dann gegeben, wenn der Wickeldurchmesser 19 geringfügig schwankt. Das wärmeschrumpffähige Material schmiegt sich stets eng anliegend, insbesondere an die vom Filmwickel abgewandte Ringfläche der Flanschscheibe. Die Folie schrumpft nicht nur in Längsrichtung der Bahn, sondern auch quer zur Bahn. Folglich preßt die Schrumpfverbindung diese Ringfläche zur Stirnfläche des Wickels. Mit Vorteil ist die Breite der Abdeckfolie 3 so gewählt, daß laterale Ränder auf einem Umfangskreis liegen, dessen Durchmesser 18 kleiner ist als der Durchmesser 19 des Filmwickels. Auch bei mechanischer Beanspruchung ist die Verpackung dadurch zuverlässig lichtdicht, daß die Schrumpffolie die Flanschscheibe gegen die Stirnfläche des Filmwickels drückt.

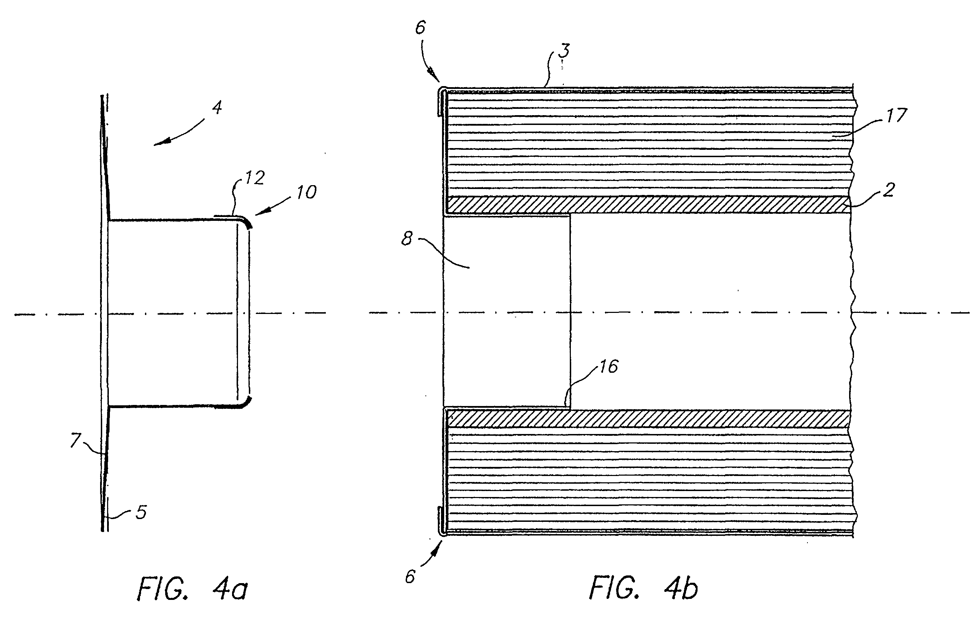

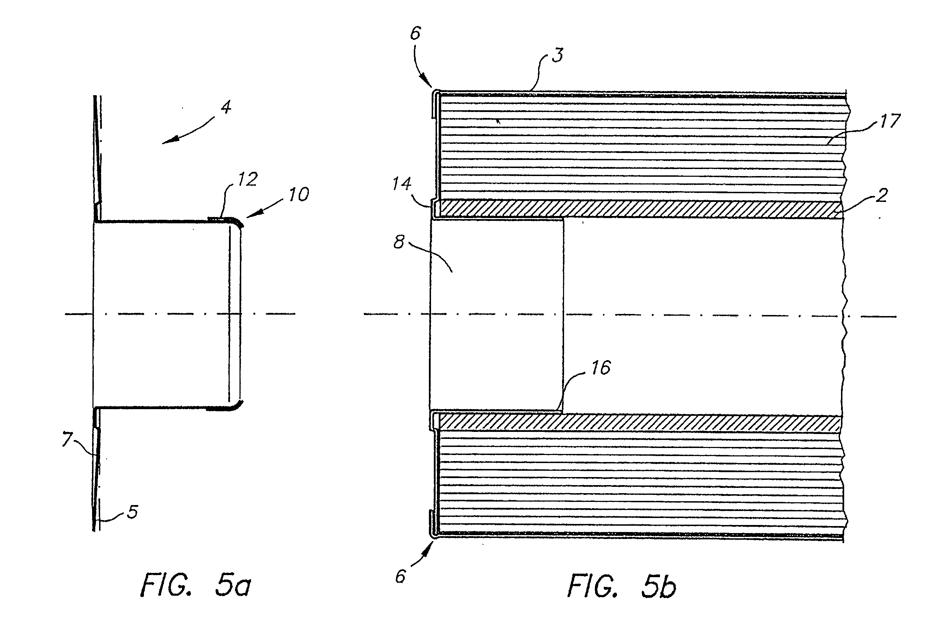

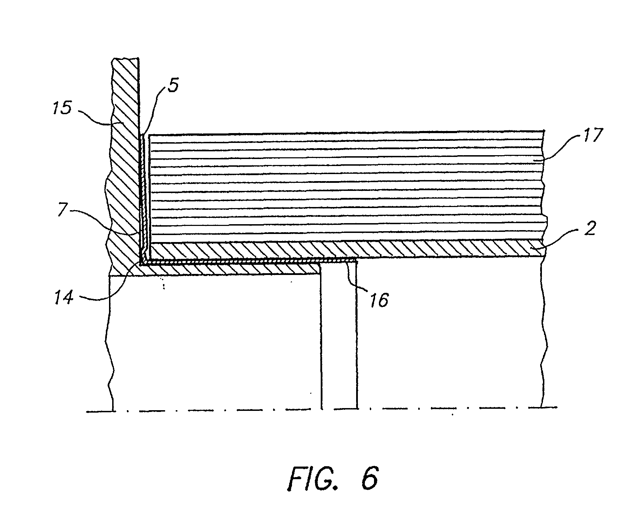

Fig. 3 zeigt eine Schnittzeichnung einer flanschförmigen Seitenabdeckung, bevor diese in der Wickelhülse befestigt wird. Die Flanschscheibe 7 ist hier als kegelförmige Ringscheibe ausgebildet, die als Tellerfeder wirkt: Die Tellerfeder ist gespannt, wenn die Verpackung geschlossen ist (Fig. 4b und Fig. 5b). Die Tellerfeder ist entspannt, wenn die Abdeckfolie abgewickelt ist. Eine geöffnete Verpackung in einem Verarbeitungsgerät ist in Fig. 6 dargestellt. Die Entlastung der Tellerfeder beim Öffnen der Verpackung bewirkt, daß die konusförmige Flanschscheibe von der Stirnfläche des Filmwickels wegsteht. Wie in Fig. 3 dargestellt, schließt im unbelasteten Zustand die Scheibenfläche der Flanschscheibe 7 mit der Tellerebene 20 einen Winkel 13 ein. Bevorzugt ist ein Winkel von 0,5 Grad bis 3 Grad. Dadurch werden Fertigungsungenauigkeiten der Seitenabdeckung ausgeglichen und stören nicht das Abrollen oder Rückspulen des lichtempfindlichen Materials. Wie in Fig. 3 dargestellt, weist der nabenförmige Ansatz einen konischen Abschnitt 9 auf und endet in einer Rundung 10. Die Rundung und der Konus wirken zentrierend, wenn eine Seitenabdeckung in das offene Ende einer Wickelhülse eingebracht wird. Bevorzugt ist die Seitenabdeckung aus Kunststoff und einstückig durch Tiefziehen hergestellt. Auf einer Wirkfläche 11 ist der Ansatz 8 mit Klebstoff 12 beschichtet Die Beschichtung kann dabei ringförmig oder punktförmig sein. Bei der Befestigung der Seitenabdeckung wird nun der nabenförmige Ansatz 8 im Inneren der Nabe mittels eines nicht dargestellten Heiz- und Anpreßwerkzeuges erwärmt. Der Kunststoff des Ansatzes 8 erwärmt sich, und der Heißschmelz-Klebstoff wird klebrig. Das Anpreßwerkzeug preßt den nabenförmigen Ansatz gegen die innere Mantelfläche der Wickelhülse. Konus 9 und Rundung 10 werden aufgeweitet und zu einer Buchse geformt und liegen nach dem Befestigungsvorgang an der Mantelfläche der Hülse an. Das umgeformte Nabenende 16 fluchtet mit der Zylindermantelfläche (Fig. 4b und Fig. 5b). Durch das so umgeformte Nabenende 16 entsteht kein Ansatz in der Wickelhülse, der das Einlegen der Filmrolle im Verarbeitungsgerät stören könnte. Durch die Wärmezufuhr wird die Wirkfläche 11 zu einer Klebefläche, mittels derer die Seitenabdeckung 4 in der Wickelhülse 2 haftend angebracht wird. Dadurch kann sich der Tubus im Kern nicht drehen. Eine sichere Drehmomentübertragung im Verarbeitungsgerät ist gewährleistet. Die dünnwandige Ausführung des nabenförmigen Abschnittes ist einerseits aus den geschilderten Platzverhältnissen erwünscht, andererseits ermöglicht es eine schnelle Wärmeleitung zum Heißschmelz-Klebstoff. Die schnelle Wärmeübertragung verkürzt die Montagezeit.

Fig. 4a zeigt in einer Schnittdarstellung eine bevorzugte Seitenabdeckung 4 vor der oben erläuterten Befestigung in der Wickelhülse. Im Teilschnitt der Fig. 4b ist die geschlossene Verpackung dargestellt.

Eine besonders bevorzugte Ausführung einer Seitenabdeckung ist in Fig. 5a und Fig. 5b dargestellt. Die Seitenabdeckung 4 weist einen vorspringenden Ansatz 14 auf, der im Verarbeitungsgerät als Abstandshalter dient. Er verhindert, daß der Aufnahmedorn 15 des Verarbeitungsgerätes stirnseitig auf die gebördelte Abdeckfolie drückt Die Abdeckfolie kann dadurch in der Aufnahmevorrichtung des Verarbeitungsgerätes nicht geklemmt werden. Die Druckentlastung erleichtert das Abziehen der Abdeckfolie, also das Öffnen der Verpackung. Der Ansatz 14 ist bevorzugt als Sicke ausgeführt.

Eine geöffnete Verpackung in einem Verarbeitungsgerät ist in einer Teilschnittdarstellung in Fig. 6 gezeigt. Die Federkraft der Tellerfeder bewirkt, daß die Flanschscheiben den Bahnweg für das lichtempfindliche Material frei geben. Durch die beidseits von der Stirnfläche weg gerichteten Flanschscheiben ist ein sicheres Rückspulen im Verarbeitungsgerät gewährleistet.

Wie eingangs dargestellt, umfaßt erfindungsgemäß die Abdeckfolie der Verpackung zumindest in seitlichen Randbereichen wärmeschrumpffähiges Material, das auf dem äußeren Rand jeder Flanschscheibe aufgeschrumpft ist. Die Abdeckfolie kann beispielsweise so ausgeführt sein, daß laterale Ränder aus wärmeschrumpffähigem Material bestehen, die mit einem nicht schrumpffähigen Folienmittelteil verbunden sind. In dieser Ausführung kann das Folienmittelteil hinsichtlich der Reißfestigkeit an die beim Abziehen der Abdeckfolie auftretenden Kräfte angepaßt werden. Die Abdeckfolie kann eine sogenannte Monofolie oder eine Verbundfolie sein. Es ist auch möglich, für den Folienmittelteil wärmeisolierendes Material zu verwenden. Dadurch kann die Verpackung auch für sehr wärmeempfindliche fotographische Materialien verwendet werden.

Natürlich kann auch die steife Seitenabdeckung aus einem Verbundwerkstoff bestehen, beispielsweise aus einem Aluminium-Kunststoffverbund. Selbstverständlich ist die Verpackung keineswegs auf fotografische Filmmaterialien beschränkt, sondern auch geeignet zum Verpacken von lichtempfindlichen Kunststoffen, wie beispielsweise Fotopolymeren, die auf einer bahnförmigen Trägerfolie aufgetragen sind. Eine weitere mögliche Ausgestaltung ist, daß der nabenförmige Ansatz der Seitenabdeckung mit dem Wickelkern verschweißt wird.

## Patentansprüche

1. Lichtdichte Verpackung umfassend:
eine Wickelhülse (2) mit offenen Enden,
eine Länge lichtempfindliches streifenförmiges Material (17), welches spiralförmig um die Wickelhülse gewickelt ist und einen hohlzylindrischen Filmwickel (1) mit im wesentlichen ebenen Stirnflächen bildet,
ein Paar flanschförmige Seitenabdeckungen (4), von denen jede eine steife Flanschscheibe (7) mit einem äußeren Rand (5), deren Durchmesser größer als der Durchmesser der äußeren Mantelfläche des Filmwickels ist, aufweist und jeweils eine Stirnfläche gegen Licht abschirmt,
eine flexible Abdeckfolie (3), die breiter als das streifenförmige Material ist und die die äußere Mantelfläche des Filmwickels sowie den äußeren Rand jeder Seitenabdeckung umhüllend gegen Licht abschirmt,
**dadurch gekennzeichnet, daß** die Abdeckfolie (3) zumindest in seitlichen Randbereichen (6) wärmeschrumpffähiges Material umfaßt und auf dem äußeren Rand (5) jeder Flanschscheibe (7) aufgeschrumpft ist.

2. Verpackung nach Anspruch 1, **dadurch gekennzeichnet, daß** die Abdeckfolie (3) eine Schrumpffolie ist, die einen Vorspann zum lichtempfindlichen Material bildet und den äußeren Rand (5) als faltenfrei eng anliegende Schrumpfverbindung umschließt.

3. Verpackung nach Anspruch 1 oder 2, **dadurch gekennzeichnet, daß** die Abdeckfolie (3) mit einer hitzebeständigen Trennschicht beschichtet ist, die beim Schrumpfen ein Verschweißen der einzelnen Lagen der Abdeckfolie verhindert.

4. Verpackung nach einem oder mehreren der vorigen Ansprüche, **dadurch gekennzeichnet, daß** die aufgeschrumpfte Abdeckfolie (3) auf die Flanschscheibe (7) einen Radialdruck ausübt, der kleiner als die niedrigste kritische Belastung der Flanschscheibe ist.

5. Verpackung nach Anspruch 4, **dadurch gekennzeichnet, daß** die Flanschscheibe (7) aus einer Kunststoffscheibe, mit einer Dicke von 0,4 mm bis 1,0 mm, besonders bevorzugt aus Polystyrol mit einer Dicke von 0,6 mm, gebildet wird und deren äußerer Rand (5) von mindestens einer Lage einer Abdeckfolie (3) mit einer Dicke von 0,05 mm bis 0,2 mm, besonders bevorzugt von einer axial vorgereckten Polyethylen-Schrumpffolie mit einer Dicke von 0,07 mm bis 0,08 mm, umhüllt wird.

6. Verpackung nach einem oder mehreren der vorigen Ansprüche, **dadurch gekennzeichnet, daß** jede flanschförmige Seitenabdeckung (4) einstückig ausgebildet ist und an jeder Flanschscheibe (7) ein nabenförmiger Ansatz (8) angeformt und in einem offenen Ende der Wickelhülse (2) haftend angebracht ist.

7. Verpackung nach Anspruch 6, **dadurch gekennzeichnet, daß** der nabenförmige Ansatz (8) dünnwandig ist und in einen konischen Abschnitt (9) mit einer Rundung (10) mündet.

8. Verpackung nach Anspruch 6 oder 7, **dadurch gekennzeichnet, daß** der nabenformige Ansatz (8) auf einer zur Wickelhülse (2) hin liegenden Wirkfläche (11) mit Klebstoff (12), bevorzugt mit einem Heißschmelz-Klebstoff, beschichtet ist.

9. Verpackung nach Anspruch 8, **dadurch gekennzeichnet, daß** der nabenförmige Ansatz (8) aus Kunststoff mit einer Schmelztemperatur, die höher als die Schmelztemperatur des Heißschmelz-Klebstoffs (12) ist, gefertigt ist.

10. Verpackung nach Anspruch 6, **dadurch gekennzeichnet, daß** jede flanschförmige Seitenabdeckung (4) tiefgezogen und aus Polystyrol oder PVC gefertigt ist.

11. Verpackung nach Anspruch 6, **dadurch gekennzeichnet, daß** die Flanschscheibe (7) als kegelförmig ausgebildete Ringscheibe, die als Tellerfeder wirkt, ausgeführt ist.

12. Verpackung nach Anspruch 11, **dadurch gekennzeichnet, daß** die kegelförmig ausgebildete Ringscheibe im unbelasteten Zustand gegenüber einer Tellerebene (20) einen Winkel (13) von 0,5° bis 3°, besonders bevorzugt einen Winkel von 2°, einschließt.

13. Verpackung nach einem oder mehreren der Ansprüche 6 bis 12, **dadurch gekennzeichnet, daß** die Flanschscheibe (7) auf einer von der entsprechenden Stirnfläche des Filmwickels (1) abgewandten Flanschfläche einen vorspringenden Ansatz (14), bevorzugt eine ringförmige Sicke (Fig. 5), aufweist und die Höhe des Ansatzes (14) mindestens so groß wie die aufgeschrumpfte Abdeckfolie (3) ist.

14. Verpackung nach einem oder mehreren der Ansprüche 1 bis 4, **dadurch gekennzeichnet, daß** jeder laterale Rand der aufgeschrumpften Abdeckfolie (3) im wesentlichen auf einem Umfangskreis liegt, dessen Durchmesser (18) um mindestens 5 mm kleiner als der Durchmesser des äußeren Randes (5) ist, besonders bevorzugt um mindestens 5 mm kleiner als der Durchmesser (19) der äußeren Mantelfläche des Filmwickels ist.

15. Verpackung nach einem oder mehreren der Ansprüche 1 bis 4, **dadurch gekennzeichnet, daß** jede Seitenabdeckung an der Wickelhülse mittels einer Kunststoffschweißverbindung verbunden ist.

16. Verfahren zum Herstellen einer lichtdichten Verpackung eines streifenförmigen lichtempfindlichen Materials, aufweisend:
eine Wickelhülse (2) mit offenen Enden,
eine Länge lichtempfindliches streifenförmiges Material (17), welches spiralförmig um die Wickelhülse gewickelt ist und einen hohlzylindrischen Filmwickel (1) mit im wesentlichen ebenen Stirnflächen bildet,
ein Paar flanschförmige Seitenabdeckungen (4), von denen jede eine steife Flanschscheibe (7) mit einem äußeren Rand (5), dessen Durchmesser größer als der Durchmesser der äußeren Mantelfläche des Filmwickels ist, aufweist und jeweils eine Stirnfläche gegen Licht abschirmt,
eine flexible Abdeckfolie (3), die breiter als das streifenförmige Material ist und die die äußere Mantelfläche des Filmwickels sowie den äußeren Rand jeder Seitenabdeckung umhüllend gegen Licht abschirmt,
**dadurch gekennzeichnet, daß** man
a) die flanschförmigen Seitenabdeckungen (4) beidseits des Filmwickels an den offenen Enden der Wickelhülse (2) haftend anbringt;
b) die äußere Mantelfläche des Filmwickels mit der Abdeckfolie (3), die ein wärmeschrumpffähiges Material umfaßt, so umwickelt, daß jeweils ein Randbereich der Abdeckfolie, bezogen auf die entsprechende Stirnfläche des Filmwickels, übersteht;
c) die überstehenden Randbereiche der Abdeckfolie erwärmt, so daß diese auf dem äußeren Rand (5) jeder Flanschscheibe (7) faltenfrei aufschrumpfen.

17. Verfahren nach Anspruch 16, **dadurch gekennzeichnet, daß** man im Verfahrensschritt a) die Seitenabdeckung (4) mittels eines Heiz- und Anpreßwerkzeuges im nabenförmigen Ansatz (8) erwärmt, an die Wickelhülse (2) preßt und an diese klebt.

## Claims

1. A light-tight package comprising:
a winding core (2) with open ends,
a length of light-sensitive strip material (17) that is wound convolutedly round the winding core and forms a hollow cylindrical film coil (1) with substantially flat end faces,
a pair of flange-shaped side covers (4), either of which comprises a rigid flange disc (7) with an outer edge (5), the diameter of which is exceeding the diameter of the outer circumferential surface of the film coil and either of which protects an end face from light,
a flexible covering film (3) that is wider than the strip material and being wrapped around the outer circumferential surface of the film roll as well as the outer edge of each side cover protects them from light,
**characterised in that**
the covering film (3) comprises, at least in lateral edge portions (6), a heat-shrinkable material and is shrunk on to the outer edge (5) of each flange disc (7).

2. A package according to claim 1 **characterised in that** the covering film (3) is a shrink film that forms a leader for the light-sensitive material and surrounds the outer edge (5) as a wrinkle-free, closely fitting, shrunk-on joint.

3. A package according to claims 1 or 2, **characterised in that** the covering film (3) is coated with a heat-resistant release layer that prevents welding of the individual layers of the covering film one to the other upon shrinkage.

4. A package according to one or more of the preceding claims, **characterised in that** the shrunk-on covering film (3) exerts a radial pressure on the flange disc (7) that is lower than the lowest critical load of the flange disc.

5. A package according to claim 4, **characterised in that** the flange disc (7) is formed from a plastic disc with a thickness of 0.4 mm to 1.0 mm, most preferably of polystyrene with a thickness of 0.6 mm, and the outer edge (5) thereof is wrapped in at least one layer of a covering film (3) with a thickness of 0.05 mm to 0.2 mm, most preferably in an axially prestretched polyethylene shrink film with a thickness of 0.07 mm to 0.08 mm.

6. A package according to one or more of the preceding claims, **characterised in that** either flange-shaped side cover (4) is realised as one piece and **in that** a hub-shaped projection (8) is integrally formed on either flange disc (7) and is secured by adhesion into an open end of the winding core (2).

7. A package according to claim 6, **characterised in that** the hub-shaped projection (8) is thin-walled and is ending in a conical section (9) that comprises a rounding (10).

8. A package according to claims 6 or 7, **characterised in that** the hub-shaped projection (8) is coated with an adhesive (12), preferably with a hot-melt adhesive, on a working face (11) facing the winding core (2).

9. A package according to claim 8, **characterised in that** the hub-shaped projection (8) is made of a plastic material with a melting temperature that is higher than the melting temperature of the hot-melt adhesive (12).

10. A package according to claim 6, **characterised in that** either flange-shaped side cover (4) is deep-drawn and is made of polystyrene or PVC.

11. A package according to claim 6, **characterised in that** the flange disc (7) is realised as an annular disc of conical construction that acts as a disc spring.

12. A package according to claim 11, **characterised in that** in its unstressed condition the annular disc of conical construction is including an angle (13) of 0.5 degrees to 3 degrees, most preferably an angle of 2 degrees, in relation to a disc plane (20).

13. A package according to one or more of claims 6 to 12, **characterised in that** the flange disc (7) has a protruding projection (14), preferably an annular bead (Figure 5), on a flange face facing away from the corresponding end face of the film coil (1) and the height of the projection (14) is at least as great as the shrunk-on covering film (3).

14. A package according to one or more of claims 1 to 4, **characterised in that** each lateral edge of the shrunk-on covering film (3) is situated substantially on a peripheral circle, the diameter (18) of which is at least 5 mm smaller than the diameter of the outer edge (5) and is most preferably at least 5 mm smaller than the diameter (19) of the outer circumferential surface of the film coil.

15. A package according to one or more of claims 1 to 4, **characterised in that** each side cover is bonded to the winding core by means of a plastic welded joint.

16. A process for producing a light-tight package for a light-sensitive strip material, said package comprising:
a winding core (2) with open ends,
a length of light-sensitive strip material (17) that is wound convolutedly round the winding core and forms a hollow cylindrical film coil (1) with substantially flat end faces,
a pair of flange-shaped side covers (4), either of which comprises a rigid flange disc (7) with an outer edge (5), the diameter of which is exceeding the diameter of the outer circumferential surface of the film coil and either of which protects an end face from light,
a flexible covering film (3) that is wider than the strip material and being wrapped around the outer circumferential surface of the film roll as well as the outer edge of each side cover protects them from light,
**characterised in that**
a) the flange-shaped side covers (4) are mounted by adhesion on the open ends of the winding core (2) on both sides of the film coil;
b) the outer circumferential surface of the film coil is wrapped in the covering film (3) comprising a heat-shrinkable material, so that an edge portion of the covering film protrudes with respect to each corresponding end face of the film coil;
c) the protruding edge portions of the covering film are heated thereby shrinking them wrinklefree on to the outer edge (5) of each flange disc (7).

17. A process according to claim 16, **characterised in that** in process step a) the side cover (4) is heated by means of a heating and pressing tool in the hub-shaped projection (8), is pressed on to the winding core (2) and is bonded thereto by adhesion.

## Revendications

1. Conditionnement étanche à la lumière comprenant :
un manchon d'enroulement (2) comprenant des extrémités ouvertes,
une longueur de matériau (17) photosensible, en forme de bande, qui est enroulé en spirale autour du manchon d'enroulement et qui forme une bobine de film (1) en forme de cylindre creux comprenant des surfaces frontales essentiellement planes,
une paire de recouvrements latéraux (4) en forme de flasques, chacun desdits recouvrements présentant un disque rigide (7) faisant office de flasque comportant un bord externe (5) dont le diamètre est supérieur au diamètre de la surface latérale externe de la bobine de film et chacun desdits recouvrements protégeant une surface frontale contre l'effet de la lumière,
une feuille de recouvrement flexible (3) qui est plus large que le matériau en forme de bande et qui protège la surface latérale externe de la bobine de film, ainsi que le bord externe de chaque recouvrement latéral contre l'effet de la lumière en les enveloppant,
**caractérisé en ce que** la feuille de recouvrement (3) comprend une matière thermorétrécissable au moins dans ses zones marginales latérales (6) et vient s'appliquer par retrait contre le bord externe (5) de chaque disque (7) faisant office de flasque.

2. Conditionnement selon la revendication 1, **caractérisé en ce que** la feuille de recouvrement (3) est une feuille thermorétrécissable qui forme une bande amorce par rapport à la matière photosensible et qui entoure le bord externe (5) à la manière d'une liaison par retrait du type exempte de plis et venant s'appliquer en ajustage serré.

3. Conditionnement selon la revendication 1 ou 2, **caractérisé en ce que** la feuille de recouvrement (3) est enduite d'une couche de séparation thermorésistante qui empêche, lors du retrait, une mise en fusion des couches individuelles de la feuille de recouvrement.

4. Conditionnement selon une ou plusieurs des revendications précédentes, **caractérisé en ce que** la feuille de recouvrement appliquée par retrait exerce une pression radiale sur le disque (7) faisant office de flasque qui est inférieure à la plus petite charge critique de la flasque en forme de disque.

5. Conditionnement selon la revendication 4, **caractérisé en ce que** le disque (7) faisant office de flasque est formé par un disque en matière synthétique possédant une épaisseur de 0,4 mm à 1,0 mm, de manière particulièrement préférée en polystyrène possédant une épaisseur de 0,6 mm, et dont le bord externe (5) est entouré par au moins une couche d'une feuille de recouvrement (3) possédant une épaisseur de 0,05 mm à 0,2 mm, de manière particulièrement préférée d'une feuille thermorétrécissable en polyéthylène soumise à un étirage préalable en direction axiale, possédant une épaisseur de 0,07 mm à 0,08 mm.

6. Conditionnement selon une ou plusieurs des revendications précédentes, **caractérisé en ce que** chaque recouvrement latéral (4) en forme de flasque est réalisé en une seule pièce, un prolongement (8) en forme de moyeu étant façonné contre chaque disque (7) faisant office de flasque et venant s'appliquer par adhérence dans une extrémité ouverte du manchon d'enroulement (2).

7. Conditionnement selon la revendication 6, **caractérisé en ce que** le prolongement (8) en forme de moyeu possède une paroi mince et débouche avec un arrondi (10) dans une section conique (9).

8. Conditionnement selon la revendication 6 ou 7, **caractérisé en ce que** le prolongement (8) en forme de moyeu est enduit, sur une surface active (11) tournée vers le manchon d'enroulement (2), d'un adhésif (12), de préférence d'un adhésif thermofusible.

9. Conditionnement selon la revendication 8, **caractérisé en ce que** le prolongement (8) en forme de moyeu est réalisé en une matière synthétique qui possède une température de fusion qui est supérieure à la température de fusion d'un adhésif thermofusible (12).

10. Conditionnement selon la revendication 6, **caractérisé en ce que** chaque recouvrement latéral (4) en forme de flasque est soumis à un emboutissage et est réalisé en polystyrène ou en PVC.

11. Conditionnement selon la revendication 6, **caractérisé en ce que** le disque (7) faisant office de flasque est réalisé sous la forme d'un disque annulaire présentant une conicité, qui agit à la manière d'une rondelle-ressort.

12. Conditionnement selon la revendication 11, **caractérisé en ce que** le disque annulaire de forme conique forme, à l'état non chargé, par rapport au plan (20) de la rondelle, un angle (13) de 0,5 ° à 3 °, de manière particulièrement préférée un angle de 2 °.

13. Conditionnement selon une ou plusieurs des revendications 6 à 12, **caractérisé en ce que** le disque (7) faisant office de flasque présente, sur une des faces de flasque se détournant de la face frontale correspondante du rouleau de film (1), un prolongement (14) faisant saillie, de préférence une moulure annulaire (voir la figure 5), la hauteur du prolongement (14) étant au moins égale à celle de la feuille de recouvrement (3) appliquée par retrait.

14. Conditionnement selon une ou plusieurs des revendications 1 à 4, **caractérisé en ce que** chaque bord latéral de la feuille de recouvrement (3) appliquée par retrait est situé essentiellement sur un cercle périphérique dans le diamètre (18) est inférieur d'au moins 5 mm au diamètre du bord externe (5), de manière particulièrement préférée inférieur d'au moins 5 mm au diamètre (19) de la surface latérale externe de la bobine de film.

15. Conditionnement selon une ou plusieurs des revendications 1 à 4, **caractérisé en ce que** chaque recouvrement latéral est relié au manchon d'enroulement à l'aide d'une liaison par fusion d'une matière synthétique.

16. Procédé pour la fabrication d'un conditionnement étanche à la lumière d'un matériau photosensible en forme de bande, présentant :
un manchon d'enroulement (2) comprenant des extrémités ouvertes,
une longueur de matériau (17) photosensible en forme de bande qui est enroulé en spirale autour du manchon d'enroulement et qui forme une bobine de film (1) en forme de cylindre creux comprenant des surfaces frontales essentiellement planes,
une paire de recouvrements latéraux (4) en forme de flasques, chacun desdits recouvrements présentant un disque rigide (7) faisant office de flasque comportant un bord externe (5) dont le diamètre est supérieur au diamètre de la surface latérale externe de la bobine de film et chacun desdits recouvrements protégeant une surface frontale contre l'effet de la lumière,
une feuille de recouvrement flexible (3) qui est plus large que le matériau en forme de bande et qui protège la surface latérale externe de la bobine de film, ainsi que le bord externe de chaque recouvrement latéral contre l'effet de la lumière en les enveloppant,
**caractérisé en ce que**
a) on applique par adhérence les recouvrements latéraux (4) en forme de flasques de part et d'autre de la bobine de film aux extrémités ouvertes du manchon d'enroulement (2) ;
b) on enveloppe la surface latérale externe de la bobine de film avec la feuille de recouvrement (3), qui comprend une matière thermorétrécissable, de telle sorte que chacune des zones marginales de la feuille de recouvrement fait saillie par rapport à la face frontale correspondante de la bobine de film ;
c) on chauffe les zones marginales de la feuille de recouvrement faisant saillie de telle sorte qu'elles viennent s'appliquer par retrait en l'absence de plis sur le bord externe (5) de chaque disque (7) faisant office de flasque.

17. Procédé selon la revendication 16, **caractérisé en ce que**, dans l'étape opératoire a), on chauffe le recouvrement latéral (4) à l'aide d'un appareil de chauffage et de pression dans le recouvrement (8) en forme de moyeu, on le presse contre le manchon d'enroulement (2) et on le colle sur ce dernier.
